# FASCICULE DE BREVET EUROPEEN

(11) **EP 2 897 714 B1**
(45) Date de publication et mention de la délivrance du brevet: **14.04.2021**
(21) Numéro de dépôt: 13779263.6
(22) Date de dépôt: 19.09.2013
(51) Int. Cl.: B01D 61/12

(54) **PROCEDE DE TEST SOUS-MARIN DE SYSTEME DE FILTRATION**
VERFAHREN ZUR UNTERWASSERÜBERPRÜFUNG EINES FILTRATIONS-SYSTEMS
METHOD FOR THE UNDERWATER TESTING OF A FILTRATION SYSTEM

(30) Priorité: 20.09.2012 FR 1258852
(43) Date de publication de la demande: 29.07.2015
(73) Titulaire: TOTAL SE, 92400 Courbevoie (FR); SAIPEM S.A, 78180 Montigny Le Bretonneux (FR); Veolia Eau - Compagnie Generale Des Eaux, 75008 Paris (FR); VWS Westgarth Limited, East Kilbride Glasgow G74 5PR (GB)
(72) Inventeur: PEDENAUD, Pierre, F-64230 Lescar (FR); HENG, Samuel, F-64160 Sedze-Maubecq (FR); BIGEONNEAU, Didier, F-31450 Montbrun-Lauragais (FR); ANRES, Stéphane, F-78210 Saint Cyr l'Ecole (FR); HALLOT, Raymond, F-78960 Voisins Le Bretonneux (FR); BAYLOT, Michel, F-07460 Saint Le Jeune (FR); BEN BOUDINAR, Mourad, Glasgow G61 1BY (GB); SKIVINGTON, Graeme, Glasgow G46 7BY (GB)
(74) Mandataire: Plasseraud IP
(86) Numéro de dépôt international: PCT/FR2013/052165
(87) Numéro de publication internationale: WO 2014/044976

(56) Documents cités:
- WO-A1-2007/138327
- CN-A- 101 844 002
- CN-B- 101 844 002
- GB-A- 2 451 008
- US-A1- 2011 132 842
- Nn Nn ET AL: "Pilot Testing for Membrane Plants", , 1 November 2011 (2011-11-01), XP055627252, Retrieved from the Internet: URL:https://www.amtaorg.com/wp-content/upl oads/17_Pilot_Testing_for_Membrane_Plants. pdf [retrieved on 2019-09-30]
- Chemical Aries ET AL: "Aries Equipment Reverse Osmosis Systems Aries Reverse Osmosis Systems", , 11 January 2008 (2008-01-11), XP055627260, Retrieved from the Internet: URL:https://www.arieschem.com/wp-content/u ploads/Reverse-Osmosis-Process.pdf [retrieved on 2019-09-30]
- PACENTI P ET AL: "Submarine seawater reverse osmosis desalination system", DESALINATION, ELSEVIER, AMSTERDAM, NL, vol. 126, no. 1-3, 1 November 1999 (1999-11-01), pages 213-218, XP004190204, ISSN: 0011-9164, DOI: 10.1016/S0011-9164(99)00177-0
- SANTOSH RAJ PANDEY ET AL: "Fouling in reverse osmosis (RO) membrane in water recovery from secondary effluent: a review", RE/VIEWS IN ENVIRONMENTAL SCIENCE & BIO/TECHNOLOGY, KLUWER ACADEMIC PUBLISHERS, DO, vol. 11, no. 2, 25 February 2012 (2012-02-25), pages 125-145, XP035062991, ISSN: 1572-9826, DOI: 10.1007/S11157-012-9272-0

## Description

### DOMAINE TECHNIQUE DE L'INVENTION

La présente invention se situe dans le domaine des applications sous-marines, en particulier dans le domaine pétrolier. L'invention concerne plus spécifiquement un procédé de test d'un système sous-marin de filtration permettant l'étude du fonctionnement des systèmes de filtration dans des conditions aquatiques.

### ART ANTERIEUR

L'injection d'eau dans les gisements d'hydrocarbures est une technique bien connue dans le milieu pétrolier. Il s'agit d'une opération qui consiste à injecter dans un puits pétrolier de l'eau, couramment nommée eau d'injection, pour d'une part récupérer les hydrocarbures et d'autre part éviter l'effondrement du puits qui peut se produire en raison de la diminution de la pression du fait de l'extraction des hydrocarbures.

La provenance de l'eau d'injection dépend généralement de sa disponibilité et des contraintes autour du lieu de l'extraction d'hydrocarbures. Par exemple, dans le cas de l'extraction offshore, il est connu d'utiliser l'eau prélevée dans la mer. Des étapes de traitement sont cependant généralement indispensables pour obtenir à partir de l'eau de mer une eau dont la qualité est suffisante pour pouvoir être réintroduite dans la formation souterraine. L'eau d'injection est toujours obtenue à travers une étape de filtration, visant à réduire voire éliminer les matières en suspension, et d'une étape de désoxygenation. Souvent, un traitement supplémentaire sous forme de désulfatation est utilisé si le contenu de la formation souterraine est tel qu'une réduction des ions de sulfates est nécessaire.

L'eau d'injection peut également être de l'eau d'aquifère, de l'eau de rivière ou de lac, et éventuellement des eaux usées domestiques ou industrielles. Là aussi, des étapes de traitement peuvent être nécessaires pour obtenir une eau dont la qualité est compatible avec l'injection dans la formation souterraine.

Lorsque l'eau d'injection est de l'eau de mer, la présence de sulfates dans l'eau est typiquement problématique si la formation souterraine contient des ions baryum, calcium ou strontium. En effet, les ions sulfate forment avec les ions baryum, calcium ou strontium des précipités qui créent des dépôts minéraux (en anglais « scaling ») préjudiciables à une bonne extraction des hydrocarbures. En outre, la présence de sulfates peut être à l'origine de la génération par des bactéries de sulfure d'hydrogène (H₂S), gaz toxique et corrosif, qui peut provoquer la corrosion des canalisations utilisées pour la récupération des hydrocarbures. L'élimination des sulfates dans l'eau avant son injection dans la formation souterraine est donc souvent nécessaire.

Un procédé classique permettant l'élimination des sulfates dans l'eau consiste en un procédé membranaire de nanofiltration, qui retient les ions multivalents et laisse passer les ions monovalents. Un autre procédé classique permettant le dessalement de l'eau consiste en un procédé d'osmose inverse. De tels procédés sont, par exemple, décrits dans les demandes de brevet WO 2006/134367 et WO 2007/138327.

Généralement, on dispose les unités de traitement de l'eau à proximité du gisement d'hydrocarbures. Dans le cas de gisements sous-marins, ces unités sont classiquement installées en surface, sur la plateforme offshore d'extraction d'hydrocarbures ou sur des plateformes annexes flottantes, couramment nommées unités FPSO (acronyme de « Floating Production, Storage and Offloading » selon la terminologie anglo-saxonne, signifiant unité flottante de production, de stockage et d'expédition).

Un des problèmes majeurs liés à l'installation en surface d'unités de traitement de l'eau est l'encombrement. Ces unités prennent de la place. Or, la gestion de l'espace sur les plateformes en mer est délicate car l'espace est limité et beaucoup d'installations sont indispensables. On a donc besoin d'unités de traitement de l'eau qui nécessitent un espace minimal sur les plateformes en mer.

Une solution à ce problème a déjà été proposée dans l'art antérieur. Elle consiste à remplacer les unités de traitement existantes par des unités sous-marines, aptes à fonctionner sous l'eau. En particulier, la demande internationale de brevet WO 2009/122134 décrit une unité sous-marine de traitement de l'eau de mer. Le fait de mettre l'unité sous l'eau présente aussi un avantage en terme énergétique : le système placé dans un environnement sous-marin bénéficie d'une pression hydrostatique approximativement proportionnelle à la profondeur à laquelle il est situé. Le brevet US 7 600 567 et la demande de brevet GB 2 451 008 décrivent également une unité sous-marine de traitement de l'eau, pouvant être placée sous l'eau à une profondeur comprise entre 250 et 700 mètres.

Or, actuellement, les découvertes de gisements d'hydrocarbures de grande taille se font de plus en plus rares dans des zones de faibles et moyennes profondeurs d'eau, c'est à dire jusqu'à 500 mètres de profondeur. Dans le but d'assurer le renouvellement des réserves, il est nécessaire de développer de nouveaux gisements situés dans les grands fonds (c'est-à-dire à une profondeur comprise entre 500 et 1 500 mètres) et dans les ultra-grands fonds (c'est-à-dire au-delà de 1 500 mètres de profondeur).

Dans les faibles et moyennes profondeurs d'eau, les conditions de température, de salinité, ainsi que la faune aquatique ne sont pas radicalement différentes des conditions de surfaces. Par contre, dans les grands fonds et les ultra-grands fonds, la température de l'eau est d'environ 3°C à 5°C et la viscosité de l'eau augmente ainsi avec la profondeur. Ainsi, les conditions environnementales auxquelles sont soumises les unités sous-marines de traitement de l'eau sont tout à fait particulières.

De plus, l'environnement sous-marin réel ne peut pas être défini uniquement par des conditions de pression et de température. Il s'agit d'un milieu complexe, avec des compositions chimiques variables, et surtout comprenant des micro-organismes spécifiques aux grands fonds et aux ultra-grands fonds.

Ces micro-organismes ont tendance à s'accrocher et à se développer sur certaines surfaces, et plus particulièrement à venir encrasser rapidement tout dispositif sous-marin. Ce phénomène d'encrassement d'origine biologique est désigné couramment par le terme anglo-saxon de « biofouling ». Il s'agit du phénomène de dégradation ou de détérioration d'une surface ou d'un objet laissé dans un milieu aquatique, comme typiquement en mer, par la croissance d'organismes vivants tels que des bactéries, des protozoaires, des algues et des crustacés.

Lorsqu'elles sont disposées à grande ou à ultra-grande profondeur, les unités sous-marines de traitement de l'eau, et en particulier les membranes de filtration qu'elles contiennent, sont donc soumises à des conditions environnementales très particulières.

Traditionnellement, le fonctionnement des membranes de filtration sous ces conditions de pression, de température et de salinité a été reproduit en laboratoire.

Cependant, cette solution n'est pas totalement satisfaisante. En effet, à l'heure actuelle, il n'existe pas à la connaissance des chercheurs de moyens de simuler de façon fiable le phénomène de biofouling en laboratoire car trop de paramètres, tels que la nature des bactéries, les courants marins, les changements saisonniers, etc., ne peuvent être reproduits.

Or, dans le cas d'unités de traitement de l'eau de mer en vue d'être utilisée comme eau d'injection dans un puits pétrolier, lesdites unités doivent de préférence rester opérationnelles plusieurs mois, voire plusieurs années sans aucune intervention. En outre, il est préférable que l'unité soit la plus robuste possible de façon à diminuer le nombre d'interventions de maintenance indispensables.

Ainsi, l'étude de l'encrassement par biofouling de filtres destinés aux grands fonds et ultra-grands fonds est particulièrement importante car elle permettrait de définir des dispositifs et les procédures de maintenances les mieux adaptés aux unités sous-marines de traitement de l'eau de mer en vue d'être utilisée comme eau d'injection dans un puits pétrolier.

Le problème posé est également vrai pour toute installation sous-marine possédant un système de filtration. Il existe de nombreux cas où les chercheurs et les industriels ont besoin de faire fonctionner des filtres sous l'eau, par exemple dans les mers et océans. On peut par exemple citer les dispositifs de pompage d'eau de mer à des fins d'analyses ou à des fins industrielles, ou bien les dispositifs de recherche et d'étude d'épaves à grande profondeur.

A titre d'exemple, la demande de brevet US 2011/0132842 décrit un dispositif et une méthode pour purifier de l'eau, notamment pour la consommation humaine, utilisant en combinaison une unité d'osmose inverse et une unité de déshumidification. Un autre exemple est donné par la demande de brevet CN 101844002 qui décrit un procédé et un dispositif de filtration permettant de prélever et d'analyser in-situ des échantillons d'eau. Toutefois, aucun de ces documents ne divulgue ni même ne suggère de méthode d'évaluation in-situ de l'encrassement des filtres. Pacenti et al.; Desalination 126(1999) 213-218 décrit un dispositif pour purifier de l'eau de mer pour la consommation humaine utilisant une unité d'osmose inverse.

C'est dans ce contexte que les inventeurs ont mis au point un procédé d'évaluation du fonctionnement de filtres, qui permet, à l'aide d'un dispositif de test sous-marin, d'étudier l'encrassement des filtres directement dans l'environnement réel sous-marin.

### RESUME DE L'INVENTION

La présente invention a entre autre pour objet un procédé de test d'un filtre d'un système sous-marin de filtration comprenant au moins ledit filtre tel que défini dans les revendications.

### DESCRIPTION DES FIGURES

La **figure 1** est une représentation schématique d'un mode de réalisation d'un dispositif de test sous-marin selon l'invention.
La **figure 2** est une représentation schématique d'un autre mode de réalisation d'un dispositif de test sous-marin selon l'invention.
La **figure 3** est une représentation schématique d'un dispositif de test sous-marin dans le contexte de son utilisation.

### DESCRIPTION DETAILLEES DE L'INVENTION

Dans la présent demande, l'expression « compris(e) entre ... et ... » doit être entendue comme incluant les bornes.

Le procédé de test d'un système sous-marin de filtration selon l'invention comprend tout d'abord une étape consistant à faire entrer un flux d'eau dans un dispositif de test sous-marin via une prise d'eau. Le dispositif de test sous-marin se caractérise entre autre par le fait qu'il comprend au moins un filtre, qui est le filtre du système sous-marin de filtration que l'on souhaite tester.

Dans la présente invention, le terme « filtre » doit être compris au sens large comme désignant un dispositif poreux à travers lequel on peut faire passer un flux liquide pour en séparer certains composants. On considérera dans ce qui suit que les membranes d'osmose, bien que non poreuses, sont des filtres.

Le filtre est une membrane de nanofiltration.

Un tamis est une grille ayant un maillage plus ou moins fin ou une surface percée de trous. Un tamis a généralement pour fonction de séparer des particules solides de tailles différentes d'un flux liquide, la taille des particules séparées dépendant de la taille du maillage ou des trous du filtre.

On désigne par le terme « préfiltre » un filtre susceptible d'arrêter les particules solides de dimensions relativement élevées, c'est-à-dire supérieures à 100 micromètres. Le préfiltre permet une filtration grossière.

Par ailleurs, les membranes de filtration sont des dispositifs bien connus de l'homme du métier qui permettent une séparation de différents composants d'un flux liquide. La nature de la séparation est déterminée en partie par la dimension des pores des membranes.

Selon la classification IUPAC :
- une membrane de microfiltration présente des macropores dont le diamètre est supérieur à 50 nm,
- une membrane d'ultrafiltration présente des mésopores dont le diamètre est compris entre 2 nm et 50 nm,
- une membrane de nanofiltration présente des micropores dont le diamètre est inférieur à 2 nm.

D'autre part, les membranes d'osmose sont des membranes particulières, bien connues de l'homme du métier. Une membrane d'osmose est une membrane semi-perméable ne laissant passer que le solvant (en général l'eau), et pas les autres substances en solution.

Le filtre dans la présente invention est une membrane de nanofiltration. De plus, selon un mode de réalisation plus avantageux, le filtre dans la présente l'invention est une membrane pour désulfatation. Par « membrane pour désulfatation », on entend dans la présente invention une membrane permettant la séparation des ions sulfate de l'eau. Il s'agit d'un mode de réalisation particulièrement avantageux pour l'industrie pétrolière, car ces membranes permettent l'élimination des sulfates dans l'eau de mer destinée à être réinjectée dans les formations souterraines contenant des hydrocarbures.

Parmi les membranes de nanofiltration pour désulfatation de l'eau de mer, on peut citer, entre autres, les membranes SR90 de DOW Filmtec et les NANO-SW de Hydranautics. Le dispositif de test sous-marin selon l'invention peut avantageusement recréer un système sous-marin de filtration plus complexe. En particulier, le dispositif de test sous-marin peut comprendre plusieurs filtres, disposés en série et/ou en parallèle, identiques ou différents. Selon un mode de réalisation préféré, le dispositif de test sous-marin comprend un filtre qui est une membrane de nanofiltration pour désulfatation, et un préfiltre, ledit préfiltre étant situé en amont de ladite membrane de nanofiltration pour désulfatation. Le dispositif peut alors comprendre, dans l'ordre par rapport à l'écoulement normal du flux d'eau dans le dispositif :
- une prise d'eau ;
- une conduite reliant ladite prise d'eau et un préfiltre ;
- ledit préfiltre ;
- une conduite reliant ledit préfiltre et une membrane de désulfatation ;
- ladite membrane de nanofiltration pour désulfatation ; puis
- d'une part, une conduite d'évacuation en aval de ladite membrane de désulfatation ; et d'autre part, une conduite d'évacuation du rétentat de la membrane de désulfatation.

Le flux d'eau entre dans le dispositif de test sous-marin via une prise d'eau. Une prise d'eau est un système classique comprenant une ouverture permettant de laisser entrer un flux d'eau dans le dispositif. La prise d'eau peut éventuellement être équipée d'une crépine retenant les éléments solides de gros diamètre, évitant ainsi un bouchage rapide du système de filtration par de gros éléments.

L'emplacement de la prise d'eau détermine la qualité de l'eau qui rentre dans le dispositif de test sous-marin. La prise d'eau peut avantageusement être mobile, par exemple au moyen d'un système télescopique, qui permet de faire varier l'emplacement de la prise d'eau sans modifier l'emplacement du dispositif de test lui-même. En particulier, un système télescopique peut permettre de déplacer le niveau de la prise d'eau, repéré par rapport au fond de l'eau ou à la surface. Le procédé selon l'invention peut éventuellement comprendre une étape consistant à déplacer la prise d'eau, à l'aide par exemple d'un système télescopique commandé à distance ou commandé par un programme pré-enregistré. Cette étape de déplacement de la prise d'eau, sans déplacer l'ensemble du dispositif de test sous-marin, peut être particulièrement avantageuse car elle permet de faire varier les conditions biologiques et physico-chimiques du flux d'eau destiné à traverser le filtre sans déplacer le dispositif de test sous-marin.

Le procédé de test d'un système sous-marin de filtration selon l'invention comprend ensuite les étapes consistant à amener le flux d'eau entré dans le dispositif de test sous-marin jusqu'audit filtre, puis à obtenir un filtrat en aval dudit filtre et rejeter ledit filtrat dans l'environnement via une conduite d'évacuation.

Dans le dispositif de test sous-marin, le filtre peut être disposé dans un module spécifique comprenant deux chambres, une première chambre en amont du filtre et une seconde chambre en aval du filtre, le filtre formant cloison entre les deux chambres. La première chambre en amont est équipée d'au moins un conduit permettant l'entrée du flux d'eau. La seconde chambre en aval est équipée d'au moins un conduit d'évacuation. Eventuellement, la première chambre en amont est aussi également équipée d'un second conduit d'évacuation. Le dimensionnement des chambres amont et aval peut être réalisé par l'homme du métier en particulier en fonction de la nature du filtre et de la nature et du débit du flux à filtrer.

Classiquement, le flux d'eau peut être amené dans la première chambre du filtre par un conduit d'alimentation. La fraction du flux traversant le filtre et parvenant dans la seconde chambre, en aval du filtre, est couramment nommée le filtrat. La fraction du flux qui est retenu par le filtre est couramment nommée le rétentat. Selon la nature du filtre, le rétentat peut être solide, liquide, ou un mélange des deux.

Pour faire circuler l'eau à travers le filtre, le dispositif de test sous-marin comprend au moins une pompe adaptée pour réaliser la filtration du flux d'eau. Ladite pompe peut être située sur la conduite reliant la prise d'eau et le filtre. La pompe peut être commandée par un système électronique. Ce système électronique peut être commandé par un programme pré-enregistré qui ne nécessite pas l'intervention d'un opérateur. Alternativement, il peut être commandé par un opérateur, posté de préférence en surface, et les informations échangées entre l'opérateur et de système électronique peuvent être transmises via un câble ou par voie dématérialisée (par exemple, par ondes).

La conduite d'évacuation en aval du filtre a pour fonction d'évacuer le filtrat du dispositif. Le dispositif étant un dispositif de test sous-marin, on préfère ne pas récupérer le filtrat. Celui-ci est donc de préférence relâché directement dans l'environnement, à proximité du dispositif de test sous-marin. Ainsi, le filtrat n'est de préférence pas stocké, même temporairement, entre son obtention en aval du filtre et son évacuation dans l'environnement. De préférence, le dispositif ne comprend pas de cuve de stockage pour le filtrat.

Eventuellement, le dispositif de test sous-marin peut comprendre une conduite d'évacuation du rétentat du filtre. Le dispositif étant un dispositif de test sous-marin, on préfère également ne pas récupérer le rétentat. Celui-ci est donc de préférence relâché directement dans l'environnement, à proximité du dispositif de test sous-marin. Lorsque le dispositif ne comprend pas de conduite d'évacuation du rétentat, le rétentat peut s'accumuler en amont du filtre. Le présent dispositif de test sous-marin peut permettre d'évaluer la vitesse d'accumulation du rétentat au niveau du filtre, et de prédire ainsi, en conditions réelles, la durée de vie du filtre, la fréquence de nettoyage nécessaire ou encore un dimensionnement approprié.

Le débit du flux d'eau filtré selon l'invention est compris entre 0,02 et 5,00 m³/h. Par comparaison, le débit d'eau filtré dans une unité de traitement d'eau destinée à être injectée dans un puits pétrolier est supérieur à 30 m³/h.

Un débit de 5,00 m³/h peut être atteint à l'aide d'une membrane de nanofiltration de dimension (10,16 cm × 15,24 cm) × 10,16 cm, éventuellement à l'aide de plusieurs membranes.

Dans un mode de réalisation particulier, le dispositif test comprend une membrane de nanofiltration de dimension (2,54 cm × 15,24 cm) × 6,35 cm et le débit d'eau filtré au travers de cette membrane est compris entre 0,2 et 0,4 m³/h.

En outre, le procédé de test selon l'invention se caractérise par le fait que le dispositif de test sous-marin est placé sous l'eau à au moins 500 mètres, notamment au moins 800 mètres de profondeur. La profondeur du dispositif est de façon préférée comprise entre 800 mètres et 3000 mètres, de façon plus préférée comprise entre 1000 mètres et 3000 mètres, et de façon encore plus préféré entre 1500 mètres et 3000 mètres.

De préférence, le dispositif de test est placé dans la mer, et le flux d'eau filtré est un flux d'eau de mer.

Le dispositif de test sous-marin est soumis à une pression extérieure comprise de façon préférée entre 80 et 300 bars, cette pression étant bien sûr fonction de la profondeur à laquelle est installé le dispositif de test sous-marin, qui correspond de préférence à la profondeur d'installation du système sous-marin de filtration définitif. La température existante à l'endroit où est installé le dispositif de test sous-marin est aussi fonction de la profondeur à laquelle se trouve le dispositif de test sous-marin, mais aussi plus généralement du lieu géographique où est placé le dispositif de test sous-marin. Par exemple, si le dispositif de test sous-marin est installé à 3000 mètres de profondeur dans le Golfe de Guinée, la température de l'eau sera d'environ 4°C. Si le dispositif de test sous-marin est installé à 500 mètres de profondeur en mer d'Arctique, notamment à 800 mètres de profondeur, la température de l'eau sera d'environ -2°C. De façon générale, le dispositif de test sous-marin est soumis à une température extérieure comprise de façon préférée entre 10°C et -2°C.

En milieu marin, il est bien connu que la durée de vie et la capacité de filtration des filtres peuvent être fortement réduites par le phénomène de biofouling qui provoque le colmatage des filtres. Cependant, il est difficile d'anticiper le phénomène de biofouling dans les conditions particulières des grands fonds océaniques : en effet, la flore bactérienne est mal connue, et l'impact que peuvent avoir les hautes pressions et les basses températures sur le biofouling n'est pas maîtrisé. Afin d'optimiser le dimensionnement et le fonctionnement d'un système sous-marin de filtration de l'eau de mer, il est nécessaire de connaître précisément les risques de biofouling dans les conditions biologiques et physico-chimiques existantes à l'endroit où le système sous-marin de filtration de l'eau de mer sera installée.

Le procédé de test de la présente invention a pour objectif de faire fonctionner un filtre *in-situ,* c'est-à-dire dans les conditions biologiques et physico-chimiques existantes au site d'installation du dispositif de test sous-marin, ce site correspondant au site prévisionnel d'installation du système sous-marin de filtration définitif. Le fonctionnement du filtre peut être surveillé lors de la mise en œuvre du procédé selon l'invention. Le procédé selon l'invention, ainsi que le dispositif de test sous-marin spécifiquement conçu pour la mise en œuvre du procédé de test, sont donc particulièrement avantageux pour quantifier de façon fiable le risque de colmatage, notamment du fait du biofouling, et *in fine* optimiser le dimensionnement et le fonctionnement du système sous-marin de filtration définitif.

La surveillance du fonctionnement du filtre peut être réalisée à tout moment, selon les techniques connues de l'homme du métier. Il peut être envisagé par exemple de remonter le dispositif de test sous-marin à la surface au bout d'un temps donné, et un opérateur peut constater l'état de colmatage du filtre.

Pour permettre de suivre dans le temps l'évolution du niveau de colmatage du filtre, le procédé de test selon l'invention comprendre en outre une étape consistant à :
- mesurer la différence de pression entre l'amont et l'aval du filtre ; et
- enregistrer cette mesure de la différence de pression dans un moyen de stockage situé dans le dispositif de test sous-marin ou transmettre cette mesure de la différence de pression à un moyen de réception situé hors du dispositif de test sous-marin.

Pour réaliser cette fonction, le dispositif de test sous-marin peut avantageusement comprendre en outre un moyen de mesure de la différence de pression entre l'amont et l'aval du filtre.

En effet, l'efficacité de la filtration est directement liée au différentiel de pression entre l'amont et l'aval du filtre. Une diminution de l'efficacité de la filtration, résultant par exemple du colmatage du filtre, peut être aisément détectée par la mesure du différentiel de pression entre l'amont et l'aval du filtre.

La différence de pression peut être mesurée avec deux capteurs de pression en soustrayant les deux résultats ou avec un unique capteur de pression différentielle. L'utilisation d'un unique capteur de pression différentielle présente l'avantage d'éviter un décalage dans le temps entre la mesure de la pression en amont et la mesure de la pression en aval du filtre. En outre, l'utilisation d'un unique capteur de pression différentielle permet avantageusement d'atteindre une meilleure précision de la mesure. A titre d'exemple, le capteur de pression peut être choisi dans le groupe constitué par les capteurs piézoélectriques, les capteurs piézorésistifs et les manomètres. L'homme du métier saura choisir le capteur adapté aux conditions et à la précision de la mesure qu'il souhaite faire.

Une fois obtenue, la mesure peut être soit enregistrée dans un moyen de stockage situé dans le dispositif de test sous-marin, soit transmise à un moyen de réception situé hors du dispositif de test sous-marin.

Dans une première alternative, la mesure de la différence de pression entre l'amont et l'aval du filtre est enregistrée dans un moyen de stockage situé dans le dispositif de test sous-marin. Ce moyen de stockage de l'information, qui peut être électronique, doit être adapté pour subir une immersion dans l'eau de mer, à grande profondeur, pour des durées qui peuvent être relativement longues. Les mesures stockées dans ce moyen de stockage ne peuvent être accessible à un utilisateur que lorsque le moyen de stockage est récupéré. Ce moyen de stockage peut être récupéré, ultérieurement à la prise des mesures, de n'importe quelles façons connues de l'homme du métier. Par exemple, le moyen de stockage peut être récupéré lorsque le dispositif de test sous-marin est remonté à la surface. Alternativement, le moyen de stockage peut être récupéré par un robot sous-marin directement sur le dispositif de test sous-marin toujours immergé. L'avantage de ce mode de réalisation est que le dispositif de test sous-marin est autonome. Il n'y a pas besoin de contact entre le dispositif de test sous-marin et le surface lors des mesures de la différence de pression.

Dans une seconde alternative, la mesure de la différence de pression entre l'amont et l'aval du filtre est transmise à un moyen de réception situé hors du dispositif de test sous-marin. La transmission de l'information peut être assurée via un câble ou par voie dématérialisée (par exemple, par ondes). Les mesures réalisées dans le dispositif de test sous-marin sont avantageusement directement et immédiatement accessibles à un utilisateur qui aurait accès au moyen de réception.

Selon un mode de réalisation particulier, la mesure de la différence de pression est transmise au moyen de réception situé hors du dispositif de test sous-marin via un ombilical reliant le dispositif de test sous-marin à une unité de commande située à flots, typiquement un bateau ou une plate-forme flottante, de préférence à l'aplomb du dispositif de test sous-marin immergé. L'ombilical selon l'invention peut avoir une longueur comprise entre 500 mètres et 4000 mètres. Cette longueur est bien évidemment fonction du site d'implantation du dispositif de test sous-marin, qui peut avantageusement correspondre au site d'implantation du système sous-marin de filtration définitif. Les ombilicaux sont des dispositifs connus dans le domaine de la production pétrolière sous-marine. Ils sont utilisés notamment pour commander des robots sous-marins destinés à intervenir sur des installations. Les ombilicaux sont étanches et sont capables de résister à des pressions extérieures comprises entre 80 et 300 bars.

Connaître la différence de pression entre le flux en amont du filtre et le flux en aval du filtre permet indirectement des suivre le niveau de donc de connaître le niveau d'encrassement de colmatage du filtre. Ce colmatage peut être dû au fonctionnement normal du filtre, et donc à la nature de l'eau qui y est filtrée, mais aussi au phénomène de biofouling. Ces deux éléments dépendent fortement des conditions biologiques et physico-chimiques existantes au site d'installation du dispositif de test sous-marin, ce site correspondant au site prévisionnel d'installation du système sous-marin de filtration définitif. Le procédé de test selon l'invention est donc particulièrement avantageux pour quantifier dans le temps de façon fiable le risque de colmatage, notamment du fait du biofouling.

De préférence, la mesure de la différence de pression peut être réalisée de façon répétitive, avec une fréquence comprise de préférence entre une fois par seconde et une fois par heure, chaque mesure obtenue étant enregistrée dans le moyen de stockage situé dans le dispositif de test sous-marin ou étant transmise au moyen de réception situé hors du dispositif de test sous-marin.

Pour pouvoir réaliser les différentes étapes décrites ci-avant, et en particulier pour pouvoir faire fonctionner la pompe adaptée pour réaliser la filtration de l'eau de mer, le dispositif de test sous-marin a besoin d'une source d'énergie.

Selon un premier mode de réalisation, le dispositif sous-marin de test est alimenté en énergie depuis la surface via un ombilical. Comme décrit ci-avant, un ombilical est un dispositif bien connu dans le domaine de la production pétrolière sous-marine. L'ombilical peut conduire un courant électrique. Il peut donc alimenter en électricité le dispositif de test sous-marin depuis la surface. En particulier, l'ombilical peut relier le dispositif de test sous-marin à une unité de commande située à flots, typiquement un bateau ou une plate-forme flottante, de préférence à l'aplomb du dispositif de test sous-marin immergé. Le même ombilical peut assurer plusieurs fonctions à la fois. Typiquement, le même ombilical peut servir de voie pour l'alimentation électrique du dispositif de test sous-marin et pour la transmission de la mesure de la différence de pression entre l'amont et l'aval du filtre à un moyen de réception situé hors du dispositif de test sous-marin.

Selon un second mode de réalisation, le dispositif de test sous-marin est autonome électriquement et est alimenté en énergie grâce à une batterie située dans le dispositif de test sous-marin. La présence de batteries n'est pas préférée en raison de leur volume et de leur poids. Toutefois, ce mode de réalisation présente l'avantage de rendre le dispositif de test sous-marin autonome et facilement déplaçable.

Pour améliorer encore la fiabilité de la mesure du niveau de colmatage du filtre, les inventeurs ont imaginé que le procédé de test selon l'invention peut en outre comprendre les étapes consistant prélever au moins un flux choisi parmi :
- le flux en amont du ou des filtres ; et
- le flux en aval du ou des filtres ; et à stocker ledit prélèvement dans un moyen de stockage situé dans le dispositif de test sous-marin ou à transmettre ledit prélèvement à un moyen de réception situé hors du dispositif de test sous-marin.

Le dispositif de test sous-marin peut donc en outre comprendre au moins une conduite de prélèvement d'un ou plusieurs flux choisi(s) parmi le flux en amont du ou des filtres et le flux en aval du ou des filtres. De plus, le dispositif de test sous-marin peut comprendre un moyen de stockage desdits prélèvements situé dans le dispositif de test sous-marin et/ou un moyen de transmission desdits prélèvements à un moyen de réception situé hors du dispositif de test sous-marin.

Le dispositif peut en outre avantageusement comprendre une pompe de prélèvement, placée sur une ou plusieurs conduites de prélèvement, qui peuvent être équipées de vannes. Cette étape de prélèvement peut être assurée à distance via l'activation de la pompe de prélèvement, et éventuellement l'activation de vannes, commandées par un système électronique. Un opérateur posté au niveau de l'unité de commande peut envoyer des instructions de mise en marche de la pompe de prélèvement et des vannes qui sont transmises par exemple via l'ombilical qui relie le dispositif de test sous-marin et son unité de commande. Alternativement, la pompe et les vannes peuvent être commandées par un programme pré-enregistré qui ne nécessite pas l'intervention d'un opérateur.

Ledit prélèvement obtenu peut alors soit être stocké dans un moyen de stockage situé dans le dispositif de test sous-marin, soit être transmis à un moyen de réception situé hors du dispositif de test sous-marin. Dans le premier cas, le stockage peut être fait par exemple dans un flacon ou un contenant quelconque fixé au dispositif de test sous-marin. Cet échantillon peut être récupéré lorsque le dispositif de test sous-marin est remonté à la surface, ou lorsque le moyen de stockage est remonté à la surface d'une façon quelconque. Dans le second cas, le prélèvement peut être transmis à un moyen de réception situé hors du dispositif de test sous-marin par exemple via une conduite de prélèvement dans un ombilical qui relie le dispositif de test sous-marin à son unité de commande, où un opérateur peut le récupérer. Une conduite de prélèvement dans un ombilical consiste en une tubulure, étanche vis-à-vis des éléments de transmission électrique qui sont généralement compris dans l'ombilical, qui permet l'acheminement des échantillons liquides.

Une fois récupéré, l'échantillon prélevé peut être analysé par un opérateur.

L'étape de prélèvement peut être ponctuelle, répétée ou continue. Comme la mesure de la différence de pression, la répétition de l'étape de prélèvement permet avantageusement à un opérateur d'effectuer un suivi de l'évolution des flux prélevés à un même endroit dans le dispositif de test sous-marin.

Il est également avantageux de prélever plusieurs échantillons dans le dispositif de test sous-marin, en particulier au moins un échantillon en amont du filtre et un échantillon en aval du filtre. L'analyse et la comparaison de ces échantillons peut donner à l'opérateur des renseignements sur le fonctionnement et l'efficacité du filtre.

Lorsque plusieurs échantillons sont prélevés, il est préférable que ces échantillons ne soient pas mélangés avant qu'ils ne soient récupérés par un opérateur. Pour ce faire, une solution consiste à espacer dans le temps le prélèvement de chaque échantillon. Lorsque plusieurs échantillons de nature différente sont transmis par une conduite de prélèvement dans un ombilical les uns à la suite des autres, il est préférable de prévoir un volume d'échantillon suffisant pour que l'échantillon soit suffisamment pur à un moment donné. Ce volume d'échantillon peut être évalué par un homme du métier en fonction typiquement du débit des flux et des dimensions de l'ombilical.

Lorsqu'un flux comprend des éléments solides susceptibles de boucher la conduite de prélèvement située dans l'ombilical, il est préféré de stocker ledit prélèvement dans un moyen de stockage situé dans le dispositif de test sous-marin. Il peut s'agir en particulier d'un prélèvement de l'eau au niveau de la prise d'eau du dispositif.

Des moyens destinés à réduire, voire à supprimer, le colmatage des filtres sont connus par l'homme du métier. Un des avantages du procédé de test selon la présente invention est qu'il permet également d'évaluer l'effet que peuvent avoir ces moyens sur le colmatage du filtre dans les conditions réelles de fonctionnement, c'est-à-dire dans les conditions biologiques et physico-chimiques .existantes au site d'installation du dispositif de test sous-marin, ce site correspondant avantageusement au site prévisionnel d'installation du système sous-marin de filtration définitif.

Selon un mode de réalisation, le procédé de test selon l'invention comprend en outre une étape de recyclage consistant à amener au moins une partie du filtrat obtenu à la sortie du filtre jusqu'au flux d'eau qui est destiné à traverser ledit filtre. Le dispositif de test sous-marin comprend avantageusement un circuit de recyclage reliant la conduite d'évacuation en aval du filtre à la conduite en amont du filtre. Ce circuit permet d'amener une partie du filtrat recueilli à la sortie du filtre jusqu'au flux d'eau qui est destiné à traverser ledit filtre. Ce système de recyclage a pour effet de diluer le flux d'eau destiné à traverser le filtre, ce qui d'une part augmente le débit du flux entrant, et d'autre part améliore la qualité du flux d'eau entrant, facilitant ainsi sa filtration.

Dans ce mode de réalisation, le dispositif de test sous-marin comprend en outre avantageusement une pompe de recyclage. Ladite pompe peut être située sur le circuit de recyclage reliant la conduite d'évacuation en aval du filtre à la conduite en amont du filtre. La pompe peut être commandée par un système électronique, via par exemple un ombilical qui relie le dispositif de test sous-marin à son unité de commande. La pompe peut être actionnée par un opérateur, de préférence posté au niveau de l'unité de commande. Alternativement, la pompe peut être commandée par un programme pré-enregistré qui ne nécessite pas l'intervention d'un opérateur.

Selon un autre mode de réalisation, le procédé de test selon l'invention comprend en outre une étape de lavage à contre-courant du filtre. Le dispositif de test sous-marin comprend alors avantageusement un circuit de lavage à contre-courant.

Le lavage à contre-courant est une méthode connue pour nettoyer les filtres. Elle consiste à faire circuler un flux d'eau en sens opposé au sens d'écoulement du flux d'eau à travers le filtre en marche normale. Ce faisant, l'eau circulant à contre-courant peut emporter avec elle les éléments plus ou moins gros qui colmatent le filtre.

L'étape de lavage à contre-courant peut comprendre l'arrêt de l'arrivée normale du flux d'eau dans le dispositif de test sous-marin, l'entrée d'un flux d'eau dans le dispositif de test sous-marin via une seconde prise d'eau, la conduite de ce flux jusqu'à la face du filtre qui est initialement du côté aval, la récupération d'un flux en amont dudit filtre et le rejet dudit flux dans l'environnement via une seconde conduite d'évacuation.

Alternativement, lorsque le dispositif de test sous-marin comprend plusieurs filtres en parallèle, l'étape de lavage à contre-courant peut consister à amener la totalité du flux d'eau entrant dans le dispositif de test sous-marin vers un seul des filtres, à récupérer au moins une partie du filtrat de ce filtre et à conduire ce filtrat jusqu'à la face aval d'un second filtre situé en parallèle du premier via la conduite normale d'évacuation du filtrat de ce second filtre, puis à récupérer ce flux en amont du second filtre et à rejeter ledit flux dans l'environnement via une conduite d'évacuation du rétentat du second filtre.

Le dispositif de test sous-marin peut comprendre en outre avantageusement une pompe de lavage à contre-courant et éventuellement un ou plusieurs vannes. L'étape de lavage à contre-courant peut être commandée à distance via l'activation de ladite pompe de lavage à contre-courant, et éventuellement l'activation de vannes commandées par un système électronique, via par exemple un ombilical qui relie le dispositif de test sous-marin à son unité de commande. La pompe peut être actionnée par un opérateur, de préférence posté au niveau de l'unité de commande. Alternativement, la pompe peut être commandée par un programme pré-enregistré qui ne nécessite pas l'intervention d'un opérateur.

Le procédé de test selon l'invention comprend en outre une étape consistant à injecter un biocide dans la conduite reliant la prise d'eau et le filtre, de préférence à proximité de la prise d'eau. Le dispositif de test sous-marin peut alors comprendre en outre un ou plusieurs réservoirs de biocide, au moins l'un de ces réservoirs étant disposé de façon à permettre l'injection de biocide dans la conduite reliant la prise d'eau et le filtre, de préférence à proximité de la prise d'eau.

L'injection de biocide dans le flux d'eau s'écoulant dans le dispositif permet de réduire le phénomène de biofouling. Les biocides bien connus pour cette application sont par exemple le DBNPA (dibromo-nitrolo-proprionamide) ou l'Isothiazoline.

L'injection de biocide peut être déclenchée à l'aide de vannes qui peuvent être commandées par un système électronique, via par exemple un ombilical qui relie le dispositif de test sous-marin à son unité de commande. Les vannes peuvent être actionnées par un opérateur, de préférence posté au niveau de l'unité de commande. Alternativement, les vannes peuvent être commandées par un programme pré-enregistré qui ne nécessite pas l'intervention d'un opérateur.

En outre, le procédé selon l'invention peut également comprendre une étape consistant à injecter du biocide dans le circuit de lavage à contre-courant si celui-ci est présent dans le dispositif de test sous-marin.

Le procédé et le dispositif de test décrit ci-avant sont avantageusement conçus pour suivre le niveau de colmatage du filtre dans les conditions biologiques et physico-chimiques existantes au site d'installation du dispositif de test sous-marin, ce site correspondant avantageusement au site prévisionnel d'installation du système sous-marin de filtration définitif. Le dispositif de test sous-marin doit donc être immergé pour que le procédé de test soit mis en œuvre.

Le procédé de test selon l'invention peut avantageusement comprendre en outre une étape préliminaire consistant à immerger le dispositif de test sous-marin dans un milieu aquatique à une profondeur d'au moins 500 mètres, puis à laisser le dispositif sous l'eau pendant une durée comprise entre 1 et 12 mois, puis à remonter le dispositif à la surface.

Cette étape de mise en place du dispositif de test sous-marin peut être réalisée à l'aide d'un treuil à flots. Le treuil peut par exemple se trouver sur un bateau ou sur une plate-forme flottante. De préférence, le treuil se trouve à proximité de l'unité de commande. L'ombilical peut servir de câble permettant la descente du dispositif de test sous-marin dans l'eau. Une fois l'étape de descente effectuée, selon un mode de réalisation préféré, le dispositif de test sous-marin est suspendu dans l'eau par l'ombilical, lui-même attaché au treuil. Ce mode de réalisation est avantageux car il permet de déplacer facilement et à tout moment le dispositif de test sous-marin. On peut ainsi effectuer des tests à différentes profondeurs.

Toutefois, l'invention n'est pas limitée à ce mode de réalisation et le dispositif de test sous-marin pourra également, par exemple, être déposé sur le fond marin.

La présente invention a également pour objet le dispositif de test sous-marin spécifiquement adapté à la mise en œuvre du procédé de test tel que décrit ci-dessus.

Ledit dispositif de test sous-marin comprend
- au moins un filtre ;
- une prise d'eau adaptée pour faire entrer dans le dispositif sous-marin un flux d'eau prélevé dans l'environnement du dispositif ;
- une conduite reliant ladite prise d'eau et ledit filtre ;
- une conduite d'évacuation en aval dudit filtre adaptée pour rejeter le filtrat dans l'environnement du dispositif ;
- au moins une pompe adaptée pour réaliser la filtration du flux d'eau au travers dudit filtre ;
- un moyen pour alimenter le dispositif en énergie.

Il peut présenter en outre toutes les caractéristiques avantageuses décrites ci-avant permettant de mettre en œuvre le procédé de test.

Le dispositif de test sous-marin peut se présenter de préférence sous une forme compacte et tenir dans une structure solide parallélépipédique, à l'exception éventuellement de la prise d'eau et de la conduite d'évacuation qui peuvent s'étendre au-delà de la structure. Les dimensions de cette structure peuvent être comprises entre 1,2 m (longueur) × 0,5 m (largeur) × 0,4 m (hauteur) et 5 m (longueur) × 2 m (largeur) × 1,6 m (hauteur), par exemple : 2,5 m (longueur) × 1 m (largeur) × 0,8 m (hauteur). Le poids total de l'unité hors de l'eau peut être compris entre 120 kg et 12 000 kg, par exemple 1200 kg.

Le dispositif de test peut être complètement ou partiellement marinisé. Dans un mode de réalisation particulier, tout ou partie du dispositif est placé dans une enceinte sous pression isolée du milieu extérieur.

Les inventeurs ont conçu le procédé selon la présente invention pour quantifier de façon fiable le risque de colmatage d'un filtre dans les conditions biologiques et physico-chimiques existantes au site d'installation d'un dispositif de test sous-marin, ce site correspondant avantageusement au site prévisionnel d'installation du système sous-marin de filtration définitif. Le procédé selon la présente invention permettent *in fine* d'optimiser le dimensionnement et le fonctionnement de du système sous-marin de filtration définitif. Les mesures et les éventuels prélèvements effectués permettent avantageusement en outre de suivre l'évolution du colmatage, d'étudier les phénomènes causant ce colmatage, et de tester l'effet des moyens permettant de réduire le colmatage.

Outre les fins de recherche et de compréhension des phénomènes physiques et chimiques en jeu, les présents dispositifs et procédé de test peuvent servir de pilotes pour un futur dispositif permanent, destiné à fonctionner de façon durable sous l'eau. Le présent dispositif et procédé de test peuvent donc servir à dimensionner le système de filtration définitif, à sélectionner les moyens de nettoyage les plus efficaces et à anticiper le remplacement futur des filtres.

D'autres caractéristiques et avantages de la présente invention ressortiront de la description de modes de réalisation particuliers représentés dans les figures.

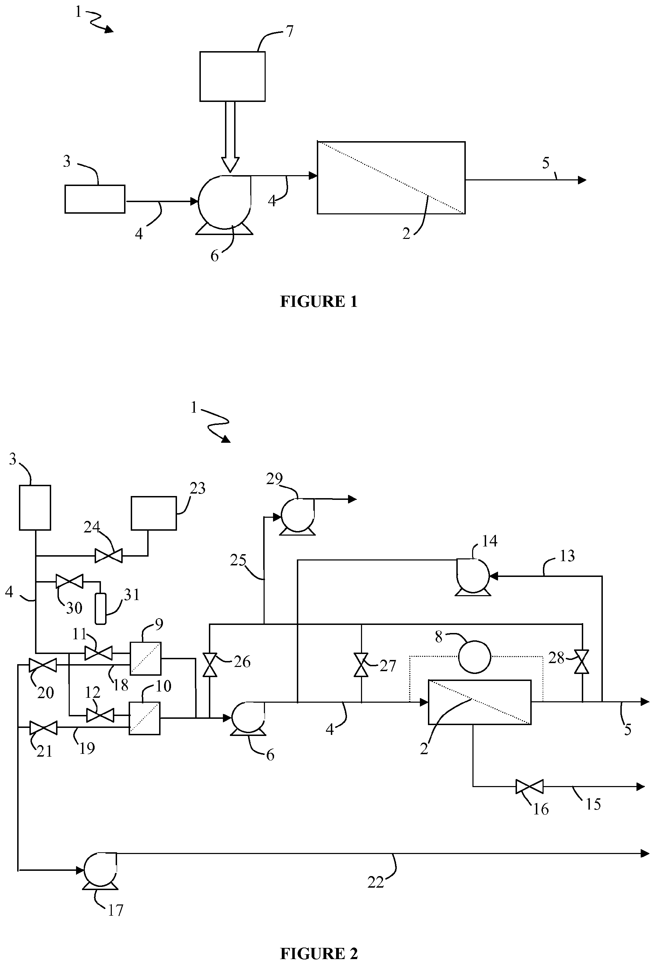

La **figure 1** est une représentation schématique d'un mode de réalisation d'un dispositif de test sous-marin.

Le dispositif de test sous-marin **1** comprend un filtre **2**, une prise d'eau **3** adaptée pour faire entrer dans le dispositif sous-marin **1** un flux d'eau prélevé dans l'environnement du dispositif, une conduite **4** reliant la prise d'eau **3** et le filtre **2**, une conduite d'évacuation **5** en aval du filtre **2** adaptée pour rejeter le filtrat dans l'environnement du dispositif. Le dispositif de test sous-marin **1** comprend en outre une pompe **6** adaptée pour réaliser la filtration de l'eau de mer au travers du filtre **2**. Cette pompe **6** est située sur la conduite **4** reliant la prise d'eau **3** au filtre **2**. En outre, le dispositif comprend un moyen **7** pour alimenter le dispositif **1** en énergie, et en particulier pour alimenter la pompe **6** en énergie. Ce moyen **7** peut être en particulier un ombilical reliant le dispositif de test sous-marin **1** à une source d'énergie, ou une batterie située dans ledit dispositif **1**.

La **figure 2** est une représentation schématique d'un autre mode de réalisation d'un dispositif de test sous-marin.

Dans ce mode de réalisation, le dispositif de test sous-marin **1** comprend également un filtre **2**, une prise d'eau **3** adaptée pour faire entrer dans le dispositif sous-marin **1** un flux d'eau prélevé dans l'environnement du dispositif, une conduite **4** reliant la prise d'eau **3** et le filtre **2**, une conduite d'évacuation **5** en aval du filtre **2** adaptée pour rejeter le filtrat dans l'environnement du dispositif, et une pompe **6**, située sur la conduite **4** reliant la prise d'eau **3** au filtre **2**, et adaptée pour réaliser la filtration de l'eau de mer au travers du filtre **2**.

Sur cette représentation schématique, le moyen d'alimentation en énergie du dispositif **1** n'est pas représenté.

Le filtre **2** est de préférence une membrane de nanofiltration pour désulfatation.

Le dispositif de test sous-marin **1** comprend également un moyen de mesure de la différence de pression **8** entre l'amont et l'aval dudit filtre **2**. La différence de pression peut être mesurée comme représentée entre la conduite **4** reliant la prise d'eau au filtre, après la pompe **6**, et la conduite d'évacuation **5** en aval du filtre **2**.

Outre le filtre **2**, le dispositif de test sous-marin **1** comprend deux préfiltres **9** et **10**, disposés en parallèles l'un de l'autre et en amont du filtre **2**. L'arrivée à chacun de ces préfiltres **9** et **10** est contrôlée par une vanne, respectivement les vannes **11** et **12**.

Le dispositif de test sous-marin **1** comprend en outre un circuit de recyclage **13** reliant la conduite d'évacuation **5** en aval du filtre **2** à la conduite **4** en amont du filtre **2** mais en aval de la pompe **6**. Une pompe de recyclage **14** est située sur le circuit de recyclage **13**, de manière à permettre la circulation du flux dans le circuit de recyclage **13**.

Le dispositif de test sous-marin **1** est également équipé d'une conduite d'évacuation **15** du rétentat du filtre **2**. Cette conduite **15** débouche dans l'environnement, à l'extérieur du dispositif de test sous-marin **1**. Le débit d'évacuation du rétentat peut être contrôlé grâce à la vanne **16**.

Le dispositif de test sous-marin **1** comprend en outre un circuit de lavage à contre-courant des préfiltres **9** et **10**. Le dispositif de test sous-marin comprend une pompe de lavage **17**. En outre, les préfiltres **9** et **10** possèdent tous les deux une conduite d'évacuation du rétentat, respectivement **18** et **19**. Ces deux conduites sont équipées de vannes, respectivement **20** et **21**. Un tel circuit de lavage à contre -courant permet de laver un des préfiltres pendant que l'autre continu à fonctionner normalement. Il n'est donc pas nécessaire d'arrêter le procédé de test pour pouvoir nettoyer les préfiltres. Par exemple, si l'on souhaite laver à contre-courant le préfiltre **10** tandis que le préfiltre **9** fonctionne normalement : Les vannes **11** et **21** sont ouvertes, tandis que les vannes **12** et **20** sont fermées. Le flux d'eau arrivant normalement par la prise d'eau **3** par la conduite **4** est dirigé uniquement vers le préfiltre **9**. Le filtrat obtenu en sortie du préfiltre **9** est divisé en deux flux : un premier flux rejoint la conduite **4** vers la pompe **6** et le filtre **2**, un second flux pénètre dans le préfiltre **10** par sa face qui est normalement en aval via la conduite normale d'évacuation du filtrat du préfiltre **10**. Ce second flux traverse le préfiltre en sens inverse par rapport au sens normal de filtration, et il peut emporter avec lui la matière qui pourrait encombrer le préfiltre **10.** Ce second flux sort par la conduite **19** qui est normalement la conduite d'évacuation du rétentat du préfiltre **10**, puis est rejeté hors du dispositif de test sous-marin **1** via la conduite **22**. La pompe de lavage **17** est située sur la conduite **22** d'évacuation, de manière à permettre la circulation du second flux dans le circuit de lavage à contre-courant. Maintenant, si l'on souhaite laver à contre-courant le préfiltre **9** tandis que le préfiltre **10** fonctionne normalement, on ouvre les vannes **12** et **20** et on ferme les vannes **11** et **21**. Le procédé de lavage à contre-courant se déroule de la même manière en inversant les rôles des préfiltres **9** et **10**.

Le dispositif de test sous-marin **1** est également équipé d'un réservoir de biocide **23**. Le réservoir **23** est adapté pour injecter du biocide dans la conduite **4** reliant la prise d'eau **3** et le filtre **2**, à proximité de la prise d'eau **3**. L'injection du biocide est contrôlée par une vanne **24**.

En outre, le dispositif de test sous-marin **1** comprend une conduite de prélèvement **25** de plusieurs flux. Un premier flux est prélevé dans la conduite **4** entre les préfiltres **9/10** et la pompe **6**, un second flux est prélevé dans la conduite **4** entre la pompe **6** et le filtre **2**, et un troisième flux est prélevé dans la conduite d'évacuation **5** en aval du filtre **2**. Le prélèvement de chacun de ces flux est contrôlé par les vannes **26**, **27** et **28**. Une pompe de prélèvement **29** est située sur le conduit de prélèvement **25** de manière à permettre le prélèvement des échantillons de chacun des flux, et leur transmission vers un moyen de réception (non représenté) situé hors du dispositif de test sous-marin **1.** D'autre part, un prélèvement du flux dans la conduite **4** en aval de la prise d'eau **3** est contrôlé par la vanne **30**. Le flux prélevé à cet endroit est stocké dans le moyen de stockage **31**, qui peut être un flacon, et qui est situé dans le dispositif de test sous-marin **1**.

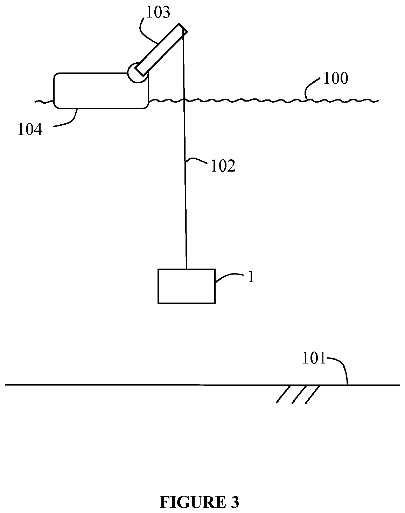

La **figure 3** est une représentation schématique d'un dispositif de test sous-marin dans le contexte de son utilisation.

Le dispositif de test sous-marin **1** est représenté immergé, entre la surface **100** et le fond de l'eau **101**. Le dispositif de test sous-marin **1** est suspendu dans l'eau par un ombilical **102**, lui-même attaché à un treuil **103** qui se trouve sur une plate-forme flottante **104**.

De préférence, une unité de commande (non représentée) du dispositif de test sous-marin **1** se trouve sur la plateforme flottante **104**.

Selon ce mode de réalisation, l'ombilical **102** peut avoir plusieurs fonctions :
- L'ombilical **102** peut alimenter en énergie électrique le dispositif de test sous-marin **1**.
- L'ombilical **102** peut servir d'élément porteur au dispositif de test sous-marin **1**.
- L'ombilical **102** peut être un moyen d'échange d'informations entre le dispositif de test sous-marin **1** et l'unité de commande. Typiquement, l'ombilical peut transmettre les commandes envoyées par un opérateur posté au niveau de l'unité de commande au dispositif de test sous-marin **1** qui est placée sous l'eau. Ces commandes peuvent être destinées à des pompes, à des vannes, ou à tout autre élément du dispositif de test sous-marin **1**.
- L'ombilical **102** peut être la voie de transmission de la mesure de la différence de pression entre l'amont et l'aval du filtre, lorsque celle-ci est mesurée, entre le dispositif de test sous-marin **1** et un moyen de réception qui peut être l'unité de commande.
- L'ombilical **102** peut enfin être la voie de transmission de d'échantillons de flux prélevés dans le dispositif de test sous-marin **1**, lorsque le dispositif de test sous-marin **1** dispose de conduites de prélèvement.

## Revendications

1. Procédé de test d'un filtre (2) d'un système sous-marin de filtration comprenant au moins ledit filtre (2) disposé en milieu aquatique, comprenant les étapes consistant à :
- placer sous l'eau à au moins 500 mètres de profondeur un dispositif de test sous-marin (1) comprenant :
o ledit filtre (2) du système sous-marin de filtration;
o une prise d'eau (3) adaptée pour faire entrer dans le dispositif (1) un flux d'eau prélevé dans l'environnement du dispositif ;
o une conduite (4) reliant ladite prise d'eau (3) et ledit filtre (2) ;
o une conduite d'évacuation (5) en aval dudit filtre (2);
o au moins une pompe (6) adaptée pour réaliser la filtration du flux d'eau au travers dudit filtre (2) ; et
o un moyen (7) pour alimenter le dispositif (1) en énergie ;
- faire entrer un flux d'eau prélevé dans l'environnement du dispositif de test sous-marin (1) dans le dispositif de test sous-marin (1) via la prise d'eau (3) ;
- amener ce flux dans le dispositif de test sous-marin (1) jusqu'audit filtre (2) ;
- obtenir une eau filtrée en aval dudit filtre (2) et rejeter ladite eau filtrée dans ledit environnement via la conduite d'évacuation (5) ;
- suivre en condition réelles l'évolution d'encrassage dudit filtre (2), dans lequel le débit d'eau filtrée est compris entre 0,02 et 5,00 m³/h,
**caractérisé en ce qu'**il comprend en outre une étape consistant à :
- mesurer la différence de pression entre l'amont et l'aval du ou des filtres (2) ; et
- enregistrer cette mesure de la différence de pression dans un moyen de stockage situé dans le dispositif de test sous-marin (1) ou transmettre cette mesure de la différence de pression à un moyen de réception situé hors du dispositif de test sous-marin (1), et
une étape consistant à injecter un biocide dans une conduite (4) reliant la prise d'eau (3) et le filtre (2), et
le filtre (2) est une membrane de nanofiltration.

2. Procédé selon la revendication 1, **caractérisé par le fait que** la mesure de la différence de pression est réalisée de façon répétitive, avec une fréquence comprise de préférence entre une fois par seconde et une fois par heure, chaque mesure obtenue étant enregistrée dans le moyen de stockage situé dans le dispositif de test sous-marin (1) ou étant transmise au moyen de réception situé hors du dispositif de test sous-marin (1).

3. Procédé de test selon la revendication 1 ou 2, comprenant en outre les étapes consistant à prélever au moins un flux choisi parmi :
- le flux en amont du ou des filtres (2) ; et
- le flux en aval du ou des filtres (2) ;
et à stocker ledit prélèvement dans un moyen de stockage situé dans le dispositif de test sous-marin (1) ou à transmettre ledit prélèvement à un moyen de réception situé hors du dispositif de test sous-marin (1).

4. Procédé de test selon l'une quelconque des revendications 1 à 3, **caractérisé en ce qu'**il comprend en outre une étape de recyclage consistant à amener au moins une partie du filtrat obtenu à la sortie du ou des filtres (2) jusqu'au flux d'eau qui est destiné à traverser le ou les filtres (2).

5. Procédé de test selon l'une quelconque des revendications 1 à 4, **caractérisé en ce qu'**il comprend en outre une étape de lavage à contre-courant du ou des filtres (2).

6. Procédé de test selon l'une quelconque des revendications 1 à 5, comprenant en outre une étape préliminaire consistant à immerger le dispositif de test sous-marin (1) dans un milieu aquatique à une profondeur d'au moins 500 mètres, puis à laisser le dispositif sous l'eau pendant une durée comprise entre 1 et 12 mois, puis à remonter le dispositif à la surface.

## Patentansprüche

1. Verfahren zum Prüfen eines Filters (2) eines Unterwasserfiltrationssystems, welches wenigstens den in einer Wasserumgebung angeordneten Filter (2) umfasst, umfassend die folgenden Schritte:
- Platzieren einer Unterwasserprüfvorrichtung (1) unter Wasser in einer Tiefe von wenigstens 500 Metern, umfassend:
o den Filter (2) des Unterwasserfiltrationssystems;
o einen Wassereinlass (3), der dazu ausgebildet ist, einen aus der Umgebung der Vorrichtung entnommenen Wasserstrom in die Vorrichtung (1) einzuleiten;
o eine Leitung (4), die den Wassereinlass (3) und den Filter (2) verbindet;
o eine Auslassleitung (5) stromabwärts des Filters (2);
o wenigstens eine Pumpe (6), die dazu ausgebildet ist, die Filtration des Wasserstroms durch den Filter (2) durchzuführen; und
o ein Mittel (7) zur Versorgung der Vorrichtung (1) mit Energie;
- Zuführen eines aus der Umgebung der Unterwasserprüfvorrichtung (1) entnommenen Wasserstroms zu der Unterwasserprüfvorrichtung (1) über den Wassereinlass (3);
- Leiten dieses Stroms in die Unterwasserprüfvorrichtung (1) zu dem Filter (2);
- Erhalten von gefiltertem Wasser stromabwärts des Filters (2) und Abgeben des gefilterten Wassers in die Umgebung über die Auslassleitung (5);
- Verfolgen der Verschmutzung des Filters (2) unter realen Bedingungen, wobei die Durchflussrate des gefilterten Wassers zwischen 0,02 und 5,00 m³/h liegt, **dadurch gekennzeichnet, dass** es ferner einen Schritt aufweist, umfassend:
- Messen der Druckdifferenz zwischen stromaufwärts und stromabwärts des Filters/der Filter (2); und
- Aufzeichnen dieser Messung der Druckdifferenz in einem in der Unterwasserprüfvorrichtung (1) befindlichen Speichermittel oder Übertragen dieser Druckdifferenzmessung an ein außerhalb der Unterwasserprüfvorrichtung (1) befindliches Empfangsmittel, und
- einen Schritt des Einspritzens eines Biozids in eine Leitung (4), die den Wassereinlass (3) und den Filter (2) verbindet, und
- wobei der Filter (2) eine Nanofiltrationsmembran ist.

2. Verfahren nach Anspruch 1, **dadurch gekennzeichnet, dass** die Messung der Druckdifferenz wiederholt erfolgt, vorzugsweise mit einer Frequenz von einmal pro Sekunde bis einmal pro Stunde, wobei jeder erhaltene Messwert in dem Speichermittel in der Unterwasserprüfvorrichtung (1) gespeichert oder an Empfangsmittel außerhalb der Unterwasserprüfvorrichtung (1) übertragen wird.

3. Prüfverfahren nach Anspruch 1 oder 2, welches ferner die Schritte des Aufnehmens wenigstens eines Stroms umfasst, welcher gewählt ist aus:
- dem Strom stromaufwärts des Filters/der Filter (2); und
- dem Strom stromabwärts des Filters/der Filter (2);
und Aufbewahren der Probe in einer Speichervorrichtung, die sich in der Unterwasserprüfvorrichtung (1) befindet, oder Übertragen der Probe an ein Aufnahmemittel, das sich außerhalb der Unterwasserprüfvorrichtung (1) befindet.

4. Prüfverfahren nach einem der Ansprüche 1 bis 3, **dadurch gekennzeichnet, dass** es ferner einen Recyclingschritt umfasst, der darin besteht, wenigstens einen Teil des am Auslass des Filters/der Filter (2) erhaltenen Filtrats dem Wasserstrom zuzuführen, der durch den Filter/die Filter (2) fließen soll.

5. Prüfverfahren nach einem der Ansprüche 1 bis 4, **dadurch gekennzeichnet, dass** es ferner einen Schritt zum Rückspülen des Filters/der Filter (2) umfasst.

6. Prüfverfahren nach einem der Ansprüche 1 bis 5, welches ferner einen vorbereitenden Schritt umfasst, der darin besteht, die Unterwasserprüfvorrichtung (1) in eine Wasserumgebung in einer Tiefe von wenigstens 500 Metern einzutauchen, dann die Vorrichtung für einen Zeitraum zwischen 1 und 12 Monaten unter Wasser zu lassen und dann die Vorrichtung wieder an die Oberfläche zu bringen.

## Claims

1. A method for testing a filter (2) of an underwater filtration system including at least said filter (2) placed in an aquatic environment, including the steps consisting in:
- placing underwater at a depth of at least 500 meters an underwater testing device (1) including:
o said filter (2) of the underwater filtration system,
o a water inlet (3) which is suitable for introducing into the device (1) a flow of water sampled from the environment of the device
o a pipe (4) connecting said water inlet (3) and said filter (2);
o a discharge pipe (5) downstream of said filter (2);
o at least one pump (6) which is suitable for filtering of the flow of water across said filter (2); and
o a means (7) for supplying the device (1) with power;
- introducing a flow of water sampled from the environment of the underwater testing device (1) into the underwater testing device (1) via the water inlet (3);
- bringing said flow in the underwater testing device (1) up to said filter (2);
- obtaining a filtrate downstream of said filter (2) and discharging said filtrate into the environment via the discharge pipe (5);
- following in real conditions the evolution of the fouling of said filter (2), wherein the flow rate of the filtrate is between 0.02 and 5.00 m³/h,
**characterized in that** it further includes a step consisting in:
- measuring the difference in pressure between the upstream side and the downstream side of said filter(s) (2);and
- recording said measurement of the difference in pressure in a storage means situated in the underwater testing device (1) or transmitting said measurement of the difference in pressure to a receiving means situated outside the underwater testing device (1),
a step consisting in injecting a biocide into a pipe (4) which connects the water inlet (3) and the filter (2),
the filter (2) is a nanofiltration membrane.

2. The method as claimed in claim 1, **characterized by** the fact that the measurement of the difference in pressure is taken in a repetitive manner, in a preferred manner at a frequency of between once a second and once an hour, each measurement obtained being recorded in the storage means situated in the underwater testing device (1) or being transmitted to the receiving means situated outside the underwater testing device (1).

3. The method for testing as claimed in claim 1 or 2, further including the steps consisting in sampling at least one flow chosen from among:
- the flow upstream of the filter(s) (2); and
- the flow downstream of the filter(s) (2);
and in storing said sample in a storage means situated in the underwater testing device (1) or in sending said sample to a receiving means situated outside the underwater testing device (1).

4. The method for testing as claimed in any one of claims 1 to 3, **characterized in that** said method further includes a recycling step consisting in bringing at least part of the filtrate obtained at the outlet of the filter(s) (2) up to the flow of water which is intended to cross said filter(s) (2).

5. The method for testing as claimed in any one of claims 1 to 4, **characterized in that** said method further includes a step for backwashing the filter(s) (2).

6. The method for testing as claimed in any one of claims 1 to 5, further including a preliminary step consisting in submerging the underwater testing device (1) into an aquatic environment at a depth of at least 500 meters, then leaving the device underwater for a duration of between 1 and 12 months inclusive, then bringing the device to the surface.
